# EUROPEAN PATENT SPECIFICATION

(11) **EP 3 035 060 B1**
(45) Date of publication and mention of the grant of the patent: **06.09.2017**
(21) Application number: 14199002.8
(22) Date of filing: 18.12.2014
(51) Int. Cl.: G01N 35/04, B65B 7/28

(54) **Method and device for handling a closing element in a laboratory automation system**
Verfahren und Vorrichtung zur Handhabung eines Verschlusselements in einem automatisierten Laborsystem
Procédé et dispositif de manipulation d'un élément de fermeture dans un système d'automatisation de laboratoire

(43) Date of publication of application: 22.06.2016
(73) Proprietor: F. Hoffmann-La Roche AG, 4070 Basel (CH); Roche Diagnostics GmbH, 68305 Mannheim (DE)
(72) Inventor: Hegel, Markus, 71332 Waiblingen (DE)
(74) Representative: Patentanwälte Ruff, Wilhelm, Beier, Dauster & Partner mbB

(56) References cited:
- EP-A1- 0 405 017
- EP-A1- 2 431 747
- US-A- 4 816 110

## Description

### BACKGROUND OF THE INVENTION

The invention relates to a method and a device for handling a closing element in a laboratory automation system. The invention further relates to a laboratory automation system.

A laboratory automation system comprises a number of pre-analytical, analytical and/or post-analytical stations, in which samples, for example blood, saliva, swab and other specimens taken from the human body, are processed. It is generally known to provide test tubes containing the samples. Prior to processing, the test tubes are usually capped with a removable plug or stopper. For processing the samples, the test tubes are decapped. After or during processing, the decapped test tubes are reclosed in order to prevent contamination of the sample and/or to store the sample inside the test tube. In order to reclose the test tubes, a closing element is provided. A correct handling of the closing element is necessary to allow for a proper closing of the test tube.

EP 2 431 747 A1 discloses a device for pressing a closing element in the form of a sealing foil on a microplate

EP 0 405 017 A1 discloses a device for ejecting wrongly oriented covers, wherein each cover consists of a middle portion and a peripheral edge extending around it asymmetrically in relation to a main plane.

### SUMMARY OF THE INVENTION

It is therefore an object of the present invention to provide a method and a device for an improved handling of a closing element in a laboratory automation system.

According to a first aspect, a method for handling a closing element in a laboratory automation system according to claim 1 is provided. In one embodiment, one layer is provided as a coating on the other layer or directly attached to the other layer. In other embodiments, the sealing foil comprises the first and the second layer, which are connected by at least one third layer.

By means of the sealing foil, the test tubes may be sealed hermetically. However, for a proper sealing of the test tube by means of a sealing foil having different material properties on an upper and a lower surface or side, it is mandatory to place the sealing foil with the correct orientation on the test tube. Depending on the device for bonding the sealing foil to the test tube, an incorrect orientation may also cause damage in the bonding or sealing device. The determining of the material property on at least one surface allows for an automated identification of the orientation of the sealing foil.

In one embodiment, the material property is determined quantitatively. In preferred embodiments, the material property is determined qualitatively, wherein the outcome is a binary signal. An orientation in one embodiment is signaled optically and/or acoustically and/or, in case of an error detection, the laboratory automation system is at least partly stopped and/or an error-recovery process is triggered. The past-processing of such a binary signal for an optical and/or acoustical signaling and/or for triggering suitable error-recovery processes is easy to implement.

In one embodiment, the sealing foil is stored in a storage device with at least one of the first surface and the second surface being accessible, and wherein said material property is determined on the accessible surface. A determination device may be incorporated in a pick-up device provided for a withdrawal of the sealing foil from the storage device. In preferred embodiments, the determination device is incorporated in the storage device. In both embodiments, the orientation may be identified while the sealing foil is retained in the storage device and prior to its use. In one embodiment, the pick-up device, for example a gripper or a suction device, is provided for transporting the sealing foil withdrawn from the storage device to a station comprising a bonding or sealing device for bonding the sealing foil to the test tube. In other embodiments, the pick-up device is part of a sealing device, wherein the pick-up device is provided for example with a heating element for causing a sealing action. As the proper orientation may be verified prior or upon withdrawal of the sealing foil from the storage device, the pick-up device may be operated in case of an improper orientation in such manner, that the sealing foil having an improper orientation is discarded.

In preferred embodiments, a plurality of sealing foils is stacked in a magazine with one of the plurality of sealing foils being accessible for a withdrawal with the first surface or the second surface being presented, and wherein said material property is determined on the presented surface, i.e. the first or second surface of the accessible sealing foil being presented. The sealing foils are withdrawn from the magazine one by one, wherein in preferred embodiments said material property of the presented surface of each sealing foil is determined in order to avoid the processing of any improperly oriented sealing foil.

The material property to be determined can be selected by the person skilled in the art. Material properties to be determined at a surface are optical properties, such as reflectivity or color, thermal properties, such as thermal conductivity, and electrical conductivity. According to preferred embodiments, the closing element is a sealing foil having an electrically non-conductive layer forming the first surface and an electrically conductive layer forming the second surface, and wherein the electrical conductivity on at least one of the first and the second surface is determined for identifying the orientation of the sealing foil. In preferred embodiments, sealing foils comprising a metallic layer, in particular a layer of aluminum foil, and a second layer, which functions as adhesive layer or bonding layer are used for sealing the test tubes, wherein heat is applied to bond the sealing foil to the test tube. The metallic layer has an electrical conductivity, whereas the adhesive layer or bonding layer is electrically non-conductive or insulating. The material property to be measured is the electrical conductivity.

In preferred embodiments, the electrical conductivity is determined by means of a continuity test. For this purpose, two electrodes are placed on the first surface and/or the second surface. By means of the continuity test, the electrical conductivity is determined qualitatively and the outcome of the continuity test is a binary signal. This binary signal may be processed suitably to avoid a use of the improperly oriented sealing foil.

The sealing foil may be stored or stacked in any orientation suitable for the handling in the subsequent sealing process. In preferred embodiments, the sealing foil is arranged such that for a proper handling of the sealing foil the electrically conductive layer is presented, wherein the electrical conductivity is determined on the presented surface. In preferred embodiments, two electrodes are placed on the presented surface for testing continuity. In case the sealing foil is presented with an improper orientation, an interruption of the current flow is detected.

According to a second aspect, a device for handling a closing element in a laboratory automation system according to claim 7 is provided. The determination device allows for an automated detection of an improperly oriented sealing foil. The design of the determination device depends on the material property to be determined and the determination method.

In preferred embodiments, the determination device is arranged to qualitatively determine the material property. For example, the determination device is arranged for identifying whether or not the surface analyzed is reflective, has a certain color etc.

In one embodiment, a storing device is provided for storing the sealing foil with at least one of the first surface and the second surface being accessible, and wherein said determination device is arranged for determining said material property of the accessible surface. The material property in one embodiment is determined by a determination device, which is fed to the storage device. In other embodiments, the determination device is integrated into a pick-up device. In preferred embodiments, the determination device is integrated in the storing device.

In preferred embodiments, the storing device is a magazine, in which a plurality of sealing foils is stacked with one of the plurality of sealing foils being accessible for a withdrawal with the first surface or the second surface being presented. The determination device is arranged for determining the material property on the presented surface.

The magazine for storing the sealing foils may have a design adapted to a pick-up device and/or the sealing foils.

Preferably, the sealing foils are stacked in the magazine in a vertical column with the lowest sealing foil being accessible for a withdrawal, wherein the magazine comprises at least two support surfaces for supporting the column of sealing foils, and wherein at least one of the support surfaces is arranged as a measurement point of the determination device. The support surfaces in this case are used for retaining the sealing foils against gravity in the magazine and as measuring points.

In preferred embodiments, the closing element is a sealing foil having an electrically non-conductive layer forming the first surface and an electrically conductive layer forming the second surface, wherein the determination device is arranged for determining the electrical conductivity on at least one of the first surface and the second surface for identifying the orientation of the sealing foil.

The measurement device in preferred embodiments comprises a continuity tester for determining the electrical conductivity by means of a continuity test. The continuity tester comprises in preferred embodiments two electrodes to be placed in contact with the first surface or the second surface for determining whether or not the respective surface is electrically conductive. In case the sealing foils are retained in a magazine stacked in a vertical column, two distinct support surfaces and/or two distinct areas of the magazine, which are electrically isolated, in one embodiment are used as electrodes.

In preferred embodiments, for a proper handling of the sealing foil, the sealing foil is arranged with the electrically conductive layer being presented, and wherein the determination device is arranged for determining the electrical conductivity on the presented surface. In particular, in preferred embodiments, the determination device is arranged for carrying out a continuity test at the presented surface. In case of a correct orientation, the presented surface is electrically conductive and a current flow is detected. In case of an improper orientation, the presented surface is electrically non-conductive and a current flow is inhibited.

In order to allow for a suitable reaction upon detection of an improperly oriented sealing foil, in one embodiment the pick-up device is arranged to discard such sealing foils. In alternative or in addition, in other embodiments a signaling device is provided for signaling an orientation of the sealing foil optically and/or acoustically and/or error recovery means are provided, which are arranged to stop the laboratory automation system at least partly and/or to trigger an error-recovery process in case of an error detection.

According to a third aspect, a laboratory automation system according to claim 15 is provided.

### BRIEF DESCRIPTION OF THE DRAWING FIGURES

In the following, an embodiment of the invention will be described in detail with reference to the drawings. Throughout the drawings, the same elements will be denoted by the same reference numerals.
- Fig. 1: is a perspective view of a magazine storing a plurality of sealing foils and an isolated sealing foiling; and
- Fig. 2: is a sectional view of the magazine of Fig. 1.

### DETAILED DESCRIPTION OF AN EMBODIMENT

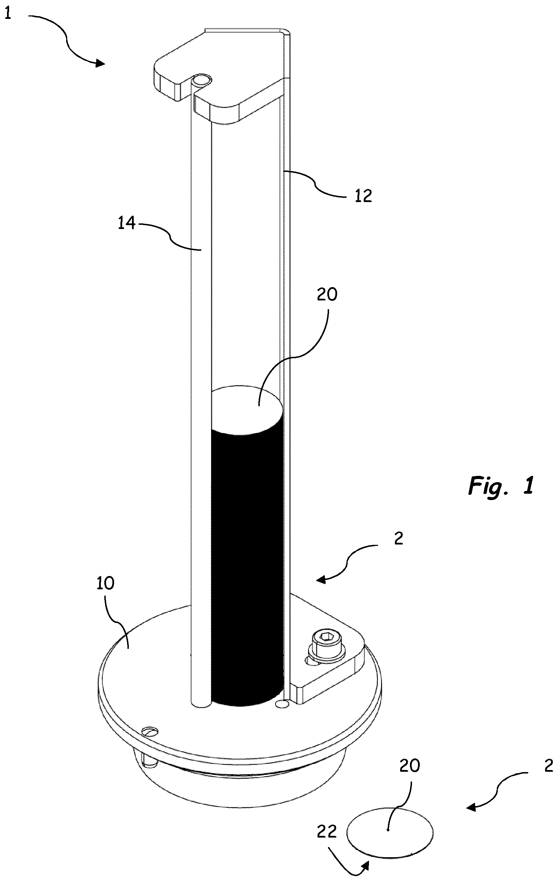

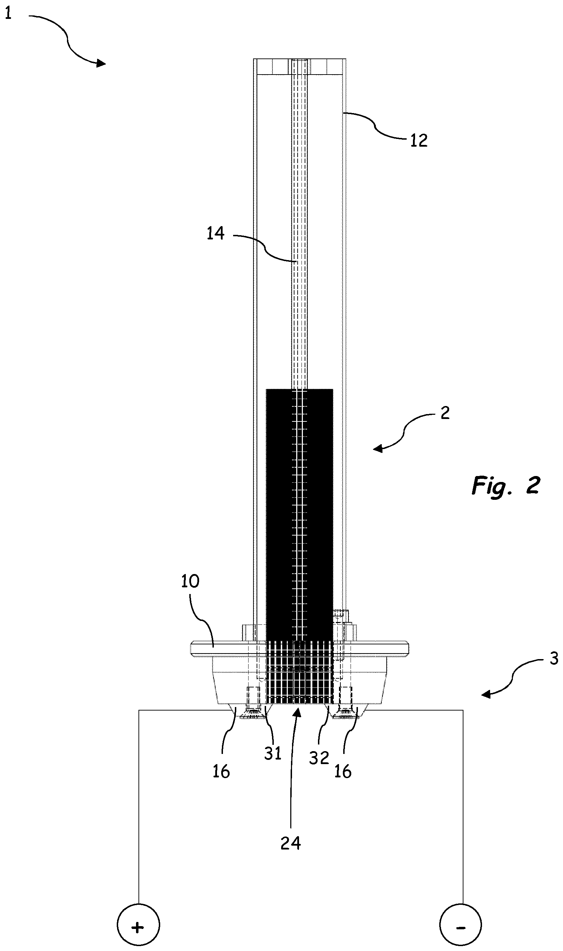

Fig. 1 and 2 are a perspective view and a sectional view, respectively, of a magazine 1 storing a plurality of sealing foils 2. In Fig. 1 in addition an isolated sealing foiling 2 is shown. The sealing foils 2 are used for recapping or reclosing a test tube (not shown) in a laboratory automation system (also not shown).

The exemplary magazine 1 shown in Figs. 1 and 2 comprises base body 10 arranged for mounting the magazine to a station or a frame of the laboratory automation system (not shown). The magazine 1 shown further comprises an angled wall element 12 and a retaining pin 14. A plurality of sealing foils 2 is stacked in the magazine 1 in a vertical column. For inserting the sealing foils 2 in the magazine 1, the retaining pin 14 is removed.

In the depicted embodiment, the sealing foils 2 have a circular shape. The base body 10 of the magazine 1 has a through opening adapted to the shape of the sealing foils 2 allowing the sealing foils 2 to travel through the base body 10 and to be withdrawn from the magazine 1 at a bottom side of the base body 10. For retaining the sealing foils 2 in the magazine 1 against gravitational forces, at least two support surfaces 16 are provided at the bottom side of the base body 10. In the depicted embodiment, the support surfaces 16 are screwed to the base body. Other fixation means are possible.

The lowest sealing foil 2 is withdrawn for example by means of a pick-up device designed as a suction device (not shown), wherein the sealing foil 2 is elastically deflected and released from the magazine 1.

The sealing foils 2 withdrawn from the magazine 1 are used by a sealing device or capping device (not shown) in order to seal a test tube (not shown). In one embodiment, the pick-up device is provided for withdrawing the sealing foils 2 from the magazine and supplying the sealing foil 2 withdrawn to the sealing device or capping device. In other embodiments, the sealing device is at least partly integrated in the pick-up device for withdrawing the sealing foils 2 from the magazine 1.

The sealing foils 2 have at least two layers forming a visible first surface 20 and an opposing second surface 22. The sealing foils 2 may contain additional layers between the first surface 20 and the second surface 22. The layers forming the first surface 20 and the second surface 22 differ in at least one material property. In the depicted embodiment, the layer forming the first surface 20 is an electrically non-conductive layer, whereas the layer forming the second surface 22 is an electrically conductive layer.

Before being withdrawn from the magazine 1, the sealing foils 2 are retained with one of the first surface 20 and the second surface 22 of the lowest sealing foil 2 being presented or uncovered. This presented or uncovered surface is referred to as presented surface 24 in the context of the application.

A proper sealing is only possible in case the sealing foil 2 - having a first surface 20 and a second surface 22 of different material properties - is placed on the test tube with a proper orientation.

In accordance with the invention, a material property on at least one of the first surface 20 and the second surface 22 is determined for identifying the orientation of the sealing foil 2. More particular, in the depicted embodiment, an electrical conductivity of the presented surface 24 of the lowest sealing foil 2 is determined by means of a continuity test.

For this purpose, in the depicted embodiment, a determination device 3 comprising a first electrode 31 and a second electrode 32 is provided, which electrodes 31, 32 contact the presented surface 24 of the lowest sealing foil 2.

Current flows, in case the sealing foil 2 is arranged in a manner that the presented surface 24 is the second surface 22 provided with the electrically conductive layer. In case the sealing foil 2 is arranged in a manner that the presented surface 24 is the first surface 20 provided with the electrically non-conductive layer, a current flow is inhibited. By evaluating the state of the respective electric circuit, an orientation of the lowest sealing foil 2 in the magazine can be identified. After the lowest sealing foil 2 has been withdrawn, the successive sealing foil will contact the electrodes 31, 32 and the orientation of this sealing foil 2 can be identified. Hence, the determination device 3 allows for an identification of the orientation of each sealing foil 2 prior to its withdrawal.

In preferred embodiments, for a proper use of the sealing foils 2 for closing the test tubes, the sealing foils 2 are to be arranged with the electrically non-conductive first surface 20 facing upwards, i.e. with the electrically conductive second surface being the presented surface 24.

In the depicted embodiment, the determination device 3 is integrated in the magazine 1, wherein the support surfaces 16 are used as the electrodes 31, 32, allowing for a compact arrangement. For this purpose, the base body 10 is made from an electrically non-conductive material. In other embodiments, the determination device is integrated in a pick-up device and/or is designed as a separate device fed to the magazine 1 for determining the material property.

## Claims

1. Method for handling a closing element in a laboratory automation system, wherein the closing element is a sealing foil (2) having at least two layers forming a first surface (20) and an opposing second surface (22), respectively, which layers differ in at least one material property, **characterized in** the step of determining said material property on at least one of the first surface (20) and the second surface (22) for identifying the orientation of the sealing foil (2), wherein the material property is selected from the group consisting of optical properties, such as reflectivity or color, thermal properties, such as thermal conductivity, and electrical conductivity.

2. Method according to claim 1, wherein the material property is determined qualitatively.

3. Method according to claim 1 or 2, wherein a plurality of sealing foils (2) is stacked in a magazine (1) with one of the plurality of sealing foils (2) being accessible for a withdrawal with the first surface (20) or the second surface (22) being presented, and wherein said material property is determined on the presented surface (24).

4. Method according to any one of claims 1, 2 or 3, wherein the closing element is a sealing foil (2) having an electrically non-conductive layer forming the first surface (20) and an electrically conductive layer forming the second surface (22), and wherein the electrical conductivity on at least one of the first surface (20) and the second surface (22) is determined for identifying the orientation of the sealing foil (2).

5. Method according to claim 4, wherein the electrical conductivity is determined by means of a continuity test.

6. Method according to claim 4 or 5, wherein for a proper handling of the sealing foil (2), the sealing foil (2) is arranged such that the electrically conductive layer is presented, and wherein the electrical conductivity is determined on the presented surface (24).

7. Device for handling a closing element in a laboratory automation system, wherein the closing element is a sealing foil (2) having at least two layers forming a first surface (20) and an opposing second surface (22), respectively, which layers differ in at least one material property, **characterized in that** it further comprises a determination device (3) for determining said material property on at least one of the first surface (20) and the second surface (22) for identifying the orientation of the sealing foil (2), wherein the material property is selected from the group consisting of optical properties, such as reflectivity or color, thermal properties, such as thermal conductivity, and electrical conductivity.

8. Device according to claim 7, wherein the determination device (3) is arranged to qualitatively determine the material property.

9. Device according to claim 7 or 8, wherein a magazine (1) is provided, in which a plurality of sealing foils (2) is stacked with one of the plurality of sealing foils (2) being accessible for a withdrawal with the first surface (20) or the second surface (22) being presented, and wherein the determination device (3) is arranged for determining the material property on the presented surface (24).

10. Device according to claim 9, wherein the sealing foils (2) are stacked in the magazine (1) in a vertical column with the lowest sealing foil (2) being accessible for a withdrawal, wherein the magazine comprises at least two support surfaces (16) for supporting the column of sealing foils (2), and wherein at least one of the support surfaces (16) is arranged as a measurement point of the determination device (3).

11. Device according to any one of claims 7 to 10, wherein the closing element is a sealing foil (2) having an electrically non-conductive layer forming the first surface (20) and an electrically conductive layer forming the second surface (22), and wherein the determination device (3) is arranged for determining the electrical conductivity on at least one of the first surface (20) and the second surface (22) for identifying the orientation of the sealing foil (2).

12. Device according to claim 11, wherein the measurement device (3) comprises a continuity tester for determining the electrical conductivity by means of a continuity test.

13. Device according to claim 12, wherein the continuity tester comprises two electrodes (31, 32) for contacting one of the first surface (20) or the second surface (22) for determining the electrical conductivity of said surface.

14. Device according to claim 11, 12 or 13, wherein for a proper handling of the sealing foil, the sealing foil (2) is arranged with the electrically conductive layer being presented, and wherein the determination device (3) is arranged for determining the electrical conductivity on the presented surface (24).

15. Laboratory automation system with a number of pre-analytical, analytical and/or post-analytical stations, and with means for carrying out a method according to any of claims 1 to 6 and/or with a device according to any one of claims 7 to 14.

## Patentansprüche

1. Verfahren zur Handhabung eines Verschlusselements in einem Laborautomatisierungssystem, wobei das Verschlusselement als Versiegelungsfolie (2) ausgebildet ist, die mindestens zwei Schichten aufweist, die jeweils eine erste Oberfläche (20) und eine gegenüberliegende zweite Oberfläche (22) bilden, wobei sich die Schichten mindestens in einer Materialeigenschaft unterscheiden,
**gekennzeichnet durch**
den Schritt zum Bestimmen der Materialeigenschaft auf der ersten Oberfläche (20) und/oder der zweiten Oberfläche (22) zum Identifizieren der Orientierung der Versiegelungsfolie (2), wobei die Materialeigenschaft ausgewählt ist aus der Gruppe bestehend aus optischen Eigenschaften, wie Reflexionsvermögen oder Farbe, thermischen Eigenschaften, wie Wärmeleitfähigkeit, und elektrischer Leitfähigkeit.

2. Verfahren nach Anspruch 1, wobei die Materialeigenschaft qualitativ bestimmt wird.

3. Verfahren nach Anspruch 1 oder 2, wobei eine Mehrzahl von Versiegelungsfolien (2) in einem Magazin (1) gestapelt sind, so dass eine der Mehrzahl von Versiegelungsfolien (2) für ein Herausziehen zugänglich ist, wobei die erste Oberfläche (20) oder die zweite Oberfläche (22) präsentiert wird, und wobei die Materialeigenschaft an der präsentierten Oberfläche (24) bestimmt wird.

4. Verfahren nach einem der Ansprüche 1, 2 oder 3, wobei das Verschlusselement als Versiegelungsfolie (2) ausgebildet ist, die eine elektrisch nichtleitende Schicht aufweist, die die erste Oberfläche (20) bildet, und eine elektrisch leitende Schicht aufweist, die die zweite Oberfläche (22) bildet, und wobei die elektrische Leitfähigkeit an der ersten Oberfläche (20) und/oder der zweiten Oberfläche (22) zum Identifizieren der Orientierung der Versiegelungsfolie (2) bestimmt wird.

5. Verfahren nach Anspruch 4, wobei die elektrische Leitfähigkeit mittels eines Kontinuitätstests bestimmt wird.

6. Verfahren nach Anspruch 4 oder 5, wobei für eine ordnungsgemäße Handhabung der Versiegelungsfolie (2) die Versiegelungsfolie (2) derart angeordnet wird, dass die elektrisch leitende Schicht präsentiert wird, und wobei die elektrische Leitfähigkeit an der präsentierten Oberfläche (24) bestimmt wird.

7. Vorrichtung zur Handhabung eines Verschlusselements in einem Laborautomatisierungssystem, wobei das Verschlusselement als Versiegelungsfolie (2) ausgebildet ist, die mindestens zwei Schichten aufweist, die jeweils eine erste Oberfläche (20) und eine gegenüberliegende zweite Oberfläche (22) bilden, wobei sich die Schichten mindestens in einer Materialeigenschaft unterscheiden,
**dadurch gekennzeichnet, dass**
sie weiter eine Bestimmungseinrichtung (3) zum Bestimmen der Materialeigenschaft an der ersten Oberfläche (20) und/oder der zweiten Oberfläche (22) zum Identifizieren der Orientierung der Versiegelungsfolie (2) umfasst, wobei die Materialeigenschaft ausgewählt ist aus der Gruppe bestehend aus optischen Eigenschaften, wie Reflexionsvermögen oder Farbe, thermischen Eigenschaften, wie Wärmeleitfähigkeit, und elektrischer Leitfähigkeit.

8. Vorrichtung nach Anspruch 7, wobei die Bestimmungseinrichtung (3) dazu ausgebildet ist, dass sie die Materialeigenschaft qualitativ bestimmt.

9. Vorrichtung nach Anspruch 7 oder 8, wobei ein Magazin (1) vorgesehen ist, in dem eine Mehrzahl von Versiegelungsfolien (2) gestapelt sind, so dass eine der Mehrzahl von Versiegelungsfolien (2) für ein Herausziehen zugänglich ist, wobei die erste Oberfläche (20) oder die zweite Oberfläche (22) präsentiert wird, und wobei die Bestimmungseinrichtung (3) zum Bestimmen der elektrischen Leitfähigkeit an der präsentierten Oberfläche (24) ausgebildet ist.

10. Vorrichtung nach Anspruch 9, wobei die Versiegelungsfolien (2) in dem Magazin (1) in einer vertikalen Säule gestapelt sind, wobei die unterste Versiegelungsfolie (2) für ein Herausziehen zugänglich ist, wobei das Magazin mindestens zwei Trägerflächen (16) zum Stützen der Säule von Versiegelungsfolien (2) umfasst, und wobei mindestens eine der Trägerflächen (16) als Messpunkt der Bestimmungseinrichtung (3) ausgebildet ist.

11. Vorrichtung nach einem der Ansprüche 7 bis 10, wobei das Verschlusselement als Versiegelungsfolie (2) ausgebildet ist, die eine elektrisch nichtleitende Schicht aufweist, die die erste Oberfläche (20) bildet, und eine elektrisch leitende Schicht aufweist, die die zweite Oberfläche (22) bildet, und wobei die Bestimmungseinrichtung (3) zum Bestimmen der elektrischen Leitfähigkeit an der ersten Oberfläche (20) und/oder der zweiten Oberfläche (22) zum Identifizieren der Orientierung der Versiegelungsfolie (2) ausgebildet ist.

12. Vorrichtung nach Anspruch 11, wobei die Messeinrichtung (3) eine Kontinuitätstesteinrichtung zum Bestimmen der elektrischen Leitfähigkeit mittels eines Kontinuitätstests umfasst.

13. Vorrichtung nach Anspruch 12, wobei die Kontinuitätstesteinrichtung zwei Elektroden (31, 32) zum Kontaktieren der ersten Oberfläche (20) oder der zweiten Oberfläche (22) zum Bestimmen der elektrischen Leitfähigkeit dieser Oberfläche umfasst.

14. Vorrichtung nach einem der Ansprüche 11, 12 oder 13, wobei für eine ordnungsgemäße Handhabung der Versiegelungsfolie die Versiegelungsfolie (2) so angeordnet ist, dass die elektrisch leitende Schicht präsentiert wird, und wobei die Bestimmungseinrichtung (3) zum Bestimmen der elektrischen Leitfähigkeit an der präsentierten Oberfläche (24) angeordnet ist.

15. Laborautomatisierungssystem mit einer Anzahl an präanalytischen, analytischen und/oder postanalytischen Stationen und mit Mitteln zum Ausführen eines Verfahrens nach einem der Ansprüche 1 bis 6 und/oder mit einer Vorrichtung nach einem der Ansprüche 7 bis 14.

## Revendications

1. Procédé de manipulation d'un élément de fermeture d'un système d'automatisation de laboratoire, dans lequel la fermeture est un film de scellement (2) présentant au moins deux couches formant respectivement une première surface (20) et une deuxième surface (22) opposée à la première, les couches différant au moins en une propriété de leur matériau,
**caractérisé par**
une étape de détermination de ladite propriété du matériau de la première surface (20) et/ou de la deuxième surface (22) en vue d'identifier l'orientation du film de scellement (2), la propriété du matériau étant sélectionnée dans l'ensemble constitué des propriétés optiques, par exemple le pouvoir réfléchissant ou la couleur, des propriétés thermiques, par exemple la conductivité thermique, et de la conductivité électrique.

2. Procédé selon la revendication 1, dans lequel la propriété du matériau est déterminée qualitativement.

3. Procédé selon les revendications 1 ou 2, dans lequel plusieurs films de scellement (2) sont empilés dans un magasin (1), l'un des plusieurs films de scellement (2) étant accessible à un enlèvement dans lequel la première surface (20) ou la deuxième surface (22) sont présentées, ladite propriété du matériau étant déterminée sur la surface (24) présentée.

4. Procédé selon l'une quelconque des revendications 1, 2 ou 3, dans lequel l'élément de fermeture est un film de scellement (2) présentant une couche électriquement non conductrice qui forme la première surface (20) et une couche électriquement conductrice qui forme la deuxième surface (22), la conductivité électrique de la première surface (20) et/ou de la deuxième surface (22) étant déterminée en identifiant l'orientation du film de scellement (2).

5. Procédé selon la revendication 4, dans lequel la conductivité électrique est déterminée au moyen d'un test de continuité.

6. Procédé selon les revendications 4 ou 5, dans lequel pour manipuler correctement le film de scellement (2), le film de scellement (2) est agencé de telle sorte que la couche électriquement conductrice soit présentée et dans lequel la conductivité électrique est déterminée sur la surface (24) présentée.

7. Dispositif de manipulation d'un élément de fermeture d'un système d'automatisation de laboratoire, dans lequel l'élément de fermeture est un film de scellement (2) présentant au moins deux couches formant respectivement une première surface (20) et une deuxième surface (22) opposée à la première, les couches différant en au moins une propriété de leur matériau, **caractérisé en ce qu'**il comprend en outre un dispositif de détermination (3) qui détermine ladite propriété du matériau sur la première surface (20) et/ou la deuxième surface (22) en vue d'identifier l'orientation du film de scellement (2), la propriété du matériau étant sélectionnée dans l'ensemble constitué des propriétés optiques, par exemple le pouvoir réfléchissant ou la couleur, des propriétés thermiques, par exemple la conductivité thermique, et de la conductivité électrique.

8. Dispositif selon la revendication 7, dans lequel le dispositif de détermination (3) est agencé de manière à déterminer qualitativement la propriété du matériau.

9. Dispositif selon les revendications 7 ou 8, dans lequel un magasin (1) dans lequel plusieurs films de scellement (2) sont empilés est prévu, l'un des plusieurs films de scellement (2) étant accessible à un enlèvement dans lequel la première surface (20) ou la deuxième surface (22) sont présentées, le dispositif de détermination (3) étant agencé pour déterminer la propriété du matériau sur la surface (24) présentée.

10. Dispositif selon la revendication 9, dans lequel les films de scellement (2) sont empilés dans le magasin (1) en une colonne verticale dans laquelle le film de scellement (2) le plus bas est accessible à un enlèvement, le magasin comprenant au moins deux surfaces de support (16) qui soutiennent la colonne de film de scellement (2), au moins l'une des surfaces de support (16) étant agencée comme point de mesure du dispositif de détermination (3).

11. Dispositif selon l'une quelconque des revendications 7 à 10, dans lequel l'élément de fermeture est un film de scellement (2) qui présente une couche électriquement non conductrice qui forme la première surface (20) et une couche électriquement conductrice qui forme la deuxième surface (22), le dispositif de détermination (3) étant agencé de manière à pouvoir déterminer la conductivité électrique sur la première surface (20) et/ou la deuxième surface (22) en vue d'identifier l'orientation du film de scellement (2).

12. Dispositif selon la revendication 11, dans lequel le dispositif de mesure (3) comprend un testeur de continuité qui détermine la conductivité électrique au moyen d'un test de continuité.

13. Dispositif selon la revendication 12, dans lequel le testeur de continuité comprend deux électrodes (31, 32) mises en contact avec la première surface (20) ou la deuxième surface (22) en vue de déterminer la conductivité électrique de ladite surface.

14. Dispositif selon les revendications 11, 12 ou 13, dans lequel pour une manipulation correcte du film de scellement, le film de scellement (2) étant agencé avec la couche électriquement conductrice présentée, le dispositif de détermination (3) étant agencé pour déterminer la conductivité électrique de la surface (24) présentée.

15. Système d'automatisation de laboratoire présentant plusieurs postes pré-analytiques, analytiques et/ou post-analytiques ainsi que des moyens permettant de mettre en oeuvre un procédé selon l'une quelconque des revendications 1 à 6 et/ou un dispositif selon l'une quelconque des revendications 7 à 14.
